# EUROPÄISCHE PATENTSCHRIFT

(11) **EP 3 524 767 B1**
(45) Veröffentlichungstag und Bekanntmachung des Hinweises auf die Patenterteilung: **10.06.2020**
(21) Anmeldenummer: 19156216.4
(22) Anmeldetag: 08.02.2019
(51) Int. Cl.: E06B 9/24, E04F 10/02, B23K 26/38, B23K 103/00

(54) **ADAPTIVER SONNENSCHUTZ UND EIN VERFAHREN ZU DESSEN HERSTELLUNG**
ADAPTIVE SUNSCREEN AND METHOD FOR ITS PRODUCTION
PROTECTION SOLAIRE ADAPTATIVE ET SON PROCÉDÉ DE FABRICATION

(30) Priorität: 09.02.2018 DE 102018103002
(43) Veröffentlichungstag der Anmeldung: 14.08.2019
(73) Patentinhaber: Technische Universität Darmstadt, 64289 Darmstadt (DE)
(72) Erfinder: Schäfer, Stefan, 70569 Stuttgart (DE); Kehl, Marvin, 64285 Darmstadt (DE)
(74) Vertreter: LifeTech IP Spies & Behrndt Patentanwälte PartG mbB

(56) Entgegenhaltungen:
- US-A1- 2012 061 029
- US-A1- 2013 139 976

## Beschreibung

Die vorliegende Erfindung bezieht sich auf einen adaptiven Sonnenschutz und ein Verfahren zu dessen Herstellung und insbesondere auf einen Sonnenschutz, der scharnier- und gelenkfrei eine dynamisch regelbare Lichtablenkfunktion bereitstellt.

### Hintergrund

Sonnenschutzvorrichtungen wie beispielsweise Raffstore, Rollos oder Markisen unterscheiden sich hinsichtlich ihrer Reflexions-, Absorptions- und Transmissionsgrade. Die Werte werden prozentual angegeben und ergeben zusammen 100%, wobei das auftreffende Licht gänzlich auf diese drei Werte aufgeteilt wird. Durch das Zusammenspiel der unterschiedlichen Anteile können Rückschlüsse auf die Transparenz und den Wärmeschutz gezogen werden.

Die prozentualen Werte eines beispielhaften Rollos hängen von Form, Farbe, Material und Beschichtung ab. Ein dünner weißer Stoff ist beispielsweise transparenter als ein schwarzer Stoff höherer Dichte, jedoch besitzt er einen geringeren Absorptionsgrad. Soll nun der Wärmeschutz des weißen Stoffes verbessert werden, so ist es möglich, diesen mit einer Metallbeschichtung zu versehen. Dies verstärkt seinen Reflexionswert, gleichzeitig verringert sich aber sein Transmissionsgrad.

Weitere bekannte Sonnenschutzvorrichtungen umfassen häufig einen außen liegenden sommerlichen Wärmeschutz aus Textilien, die jedoch den Nachteil aufweisen, dass keine Lichtlenkung möglich ist. Außerdem ist keine Dynamik oder eine individuelle, fensterweise Steuerung möglich. Ferner ist bei den bekannten Sonnenschutzanlagen häufig keine Flächen-diverse, inhomogene Streuung der Lichtdurchlässigkeit möglich.

Daher wird ein beispielhaftes Rollo in der Regel mit seinen spezifischen Reflexions-, Absorptions- und Transmissionsgraden in Abhängigkeit vom Verwendungszweck sowie seiner Optik gewählt. So wird in Privaträumen (z. B. Schlafzimmer) eher ein blickdichtes Material gewählt, während man in Büroräumen zu einem transparenteren Rollo tendiert. Dies hat jedoch den Nachteil, dass das einmal gewählte Material den Anwendungsbereich beträchtlich einschränkt. Die Variationsmöglichkeiten des Lichteinfalls beschränken sich im Wesentlichen auf geschlossene und offene Rollos, da das Material der konventionellen Rollos keine Änderung des Transmissionsgrades erlaubt.

Weitere bekannte Sonnenschutzvorrichtungen sind die diversen Raffstores, die zwar eine Regelung der Transmission erlauben, dafür aber eine umfangreiche Mechanik mit diversen Scharnieren, Schnüren und Kordeln aufweisen, die die Langlebigkeit einschränken bzw. eine permanente Wartung erfordern.

US 2013/139976 A1 offenbart beispielsweise ein bekanntes System zur Steuerung der Lichtdurchlässigkeit mit einer Barriere für Gebäude.

Es besteht daher ein Bedarf nach weiteren Sonnenschutzsystemen, die insbesondere ein stufenlose Regelung der Transmissionsgrade erlauben und die die bekannten Gelenke/Scharniere ersetzen, um so eine flexible Lösung für verschieden Einsatzgebieter bereitzustellen, ohne auf eine permanente Wartung angewiesen zu sein.

### Kurzbeschreibung der Erfindung

Zumindest ein Teil der obengenannten Probleme wird durch ein Verfahren zum Herstellen eines adaptiven Sonnenschutzes nach Anspruch 1 und einen Sonnenschutz nach Anspruch 8 gelöst. Die abhängigen Ansprüche definieren weitere vorteilhafte Ausführungsformen für das Herstellungsverfahren.

Die vorliegende Erfindung bezieht sich auf ein Verfahren zur Herstellung eines adaptiven Sonnenschutzes. Das Verfahren umfasst die Schritte: Bereitstellen eines Textilmaterials; Erzeugen einer Vielzahl von Schuppen durch ein abschnittsweise Durchtrennen des Textilmaterials mittels eines Lasers (sogenanntes Lasercutting); und Aufbrechen der durch das Lasertrennen erzeugten Ränder, um ein einseitiges Aufklappen der Schuppen bei Ausübung einer Zugspannung auf das Textilmaterial zu erreichen.

Das Aufbrechen der Ränder wird derart ausgeführt, dass Oberflächenbereiche der Ränder auf der Seite, zu der sich die Schuppen bei Ausübung einer Zugspannung aufklappen sollen, überdehnt werden.

Optional wird das Überdehnen durch zumindest eine Rolle ausgeführt, über welche das abschnittsweise durchtrennte Textilmaterial unter Ausübung einer Zugspannung gerollt wird.

Optional wird die Vielzahl von Schuppen in Form von mehreren horizontal angeordneten Reihen gebildet, die abwechselnd versetzt zueinander ausgebildet werden. Zwischen zwei benachbarten Schuppen in einer Reihe werden Stege aus Textilmaterial gebildet. Das Textilmaterial kann eine Vielzahl von Fasern aufweisen und die Stege können in Abhängigkeit der Fasern derart ausgebildet werden, dass sich mehrere Fasern durch jeden Steg hindurch erstrecken.

Optional werden die Schuppen in einer Horizontalen nebeneinander angeordnet und das Durchtrennen des Textilmaterials zum Ausbilden der Schuppen wird derart ausgeführt, dass die Schuppen entlang ihrer Seitenflanken keinen Winkel von mehr als 45° zur Horizontalen aufweisen.

Optional werden die Endabschnitte der durch das Durchtrennen erzeugten Laserschnitte mit kreisförmigen Verbreiterungen gebildet, um auftretende Spannungen beim Ausüben der Zugspannung um die Endabschnitte herum zu leiten.

Optional werden die Laserschnitte senkrecht zur Schnittrichtung mit einem Querschnitt derart gebildet, dass sich eine Schnittbreite in eine Richtung verjüngt. Beispielsweise kann auf der Seite der Lasereinstrahlung der Schnitt breiter ausgebildet werden.

Optional werden die Schuppen so gebildet, dass die Anzahl der übereinander angeordneten Schuppen zu einem Randbereich des Textilmaterials zunimmt.

Die vorliegende Erfindung bezieht sich auch auf einen adaptiven Sonnenschutz mit einem Textilmaterial und einer Vielzahl von Schuppen, die durch ein abschnittsweises Durchtrennen des Textilmaterials mittels eines Lasers gebildet sind. Die durch das Lasertrennen erzeugten Ränder sind auf einer Seite des Textilmaterials stärker aufgebrochen als auf einer gegenüberliegenden Seite, um auf diese Weise ein einseitiges Aufklappen der Schuppen bei Ausübung einer Zugspannung auf das Textilmaterial zu erreichen, wobei Oberflächenbereiche der Ränder auf jener Seite, wohin die Schuppen bei Ausübung einer Zugspannung aufklappen, überdehnt sind.

Ausführungsbeispiele lösen somit zumindest einen Teil der eingangs erwähnten Probleme durch eine gewählte Schnitttechnik für einen Sonnenschutz, bei der das Material in einem vorgegebenen Raster eingeschnitten wird. Als Ergebnis kommt es zu Verwölbungen (Aufklappen der Schuppen) beim Auseinanderziehen des Textilmaterials. Die Verformungen treten bei Anwendung der Zugspannung auf, da die erzeugten Spannungen im Bereich der Stege Zugkräfte und Drehmomente erzeugen. Im inneren Bereich sind diese weitgehend homogen und die Momente in den jeweiligen Stegen entgegengesetzt. Dies führt dazu, dass die beinahe spannungsfreien Zwischenbereiche früh beginnen, sich zu verdrehen, während die unter hoher Zugkraft stehenden Stege einen größeren Widerstand aufweisen. Als Folge beginnt sich das Gesamtsystem zu verwölben.

Vorteile von Ausführungsbeispielen ergeben sich insbesondere aus der Vermeidung der sonst üblichen Scharniere oder Gelenke. Die Regelung der Transmission durch die Bewegung der Schuppen wird über die Form und Elastizität erreicht. Darüber hinaus entfallen durch die Vermeidung von Scharnieren beispielsweise auftretende Reib- und Verschleißerscheinungen, was sich positiv auf die Lebensdauer des Sonnenschutzes auswirkt. Wird die Verformung der Schuppen zudem so eingestellt, dass sie ausschließlich im elastischen Verformungsbereich des gewählten Materials stattfindet, ist die Lebensdauer lediglich von der Materialermüdung abhängig.

### Kurzbeschreibung der Figuren

Die Ausführungsbeispiele der vorliegenden Erfindung werden besser verstanden anhand der folgenden detaillierten Beschreibung und den beiliegenden Zeichnungen der unterschiedlichen Ausführungsbeispiele, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt einen adaptiven Sonnenschutz gemäß einem Ausführungsbeispiel der vorliegenden Erfindung.
- Fig. 2: veranschaulicht eine mögliche Nachbehandlung des Textilmaterials gemäß einem Ausführungsbeispiel.
- Fig. 3: zeigt ein Ausführungsbeispiel, bei welchen die Anzahl der Schuppen im Randbereich des Textilmaterials zunehmen.
- Fig. 4: zeigt Ausführungsbeispiel zur Ausgestaltung der Endpunkte der Laserschnitte.
- Fig. 5: zeigt eine Querschnittsansicht senkrecht zu einem Laserschnitten mit einer nichtkonstanten Schnittbreite gemäß einem weiteren Ausführungsbeispiel.
- Fig. 6: zeigt ein Flussdiagram für ein Verfahren zur Herstellung des Sonnenschutzes gemäß einem Ausführungsbeispiel der vorliegenden Erfindung.

### Detaillierte Beschreibung

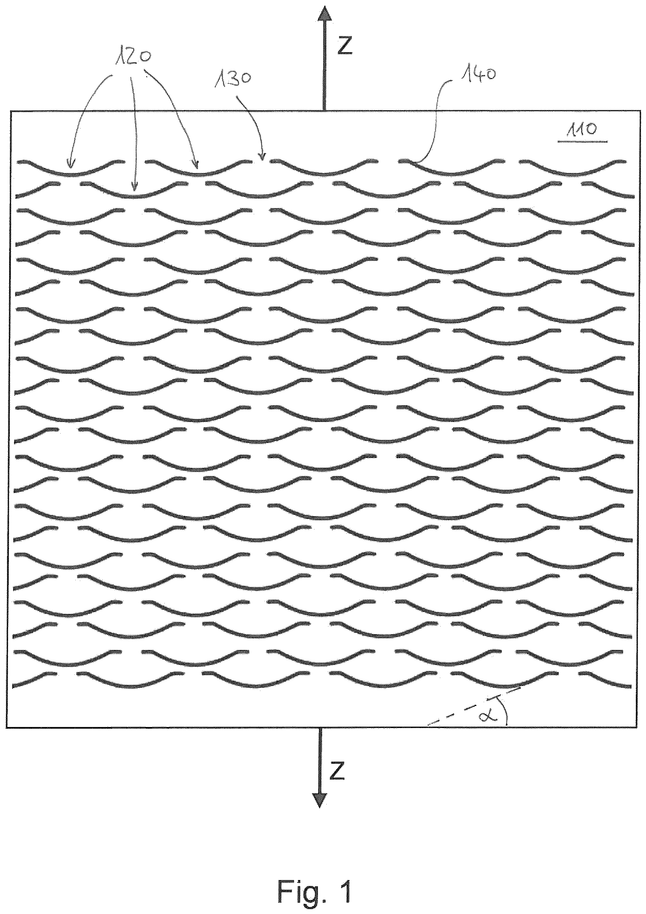

**Fig. 1** zeigt einen adaptiven Sonnenschutz gemäß einem Ausführungsbeispiel der vorliegenden Erfindung, der ein Textilmaterial 110 umfasst, auf welchem eine Vielzahl von Schuppen 120 ausgebildet sind, die sich entsprechend einer vertikal ausgebübten Zugspannung Z mehr oder weniger stark aufklappen. Die Schuppen 120 sind entlang horizontalen Reihen nebeneinander angeordnet, wobei zwischen zwei benachbarten Schuppen 120 Stege 130 ausgebildet sind und die Schuppen 120 durch Laserschnitte 140 (durch Lasercutting) gebildet sind. Außerdem sind mehrere Reihen von Schuppen 120 übereinander angeordnet, wobei die einzelnen Reihen von Schuppen 120 abwechselnd zueinander versetzt sind, sodass die Stege 130 beispielsweise oberhalb einer entsprechenden darunterliegenden Schuppe 120 ausgebildet sind, die dann wiederum oberhalb eines Steges 130 der nachfolgenden Reihe von Schuppen 120 ausgebildet ist.

Gemäß Ausführungsbeispielen der vorliegenden Erfindung werden die Schuppen 120 durch ein Durchtrennen des Textilmaterials 110 mittels eines Lasers hergestellt. Die Schuppen 120 sind insbesondere flach ausgebildet, sodass sich ein maximaler Winkel a einer Tangentialen an der Schnittlinie 140 des Lasers relativ zu der Horizontalen von höchstens 60° (oder höchstens 45° oder höchstens 20°) ergibt. An den jeweiligen Endpunkten der Laserschnitte 140, verlaufen die Laserschnitte 140 beispielsweise nahezu parallel zur Horizontalen (senkrecht zur Zugrichtung Z), während sie dazwischen leicht nach unten gewölbt sind.

Außerdem sind die Stege 130 so breit ausgebildet, dass die Zugspannungen Z, die durch ein Auseinanderziehen des Textilmaterials 110 sich ergeben, durch die Stege hindurch zu der darüber liegenden Reihe von Schuppen 120 geleitet werden. Das Textilmaterial 110 kann beispielsweise eine Vielzahl von gewebten Fasern aufweisen und die Stege 130 können so breit ausgebildet sein bzw. die Fasern können so dicht aneinander geordnet werden, dass durch jeden Stege 130 ein oder mehrere Fasern verlaufen, um die Spannungen von einer darunterliegenden Reihe von Schuppen 120 um das Ende des Laserschnittes 140 herum zu den seitlich daneben liegenden Schuppen 120 weiterzuleiten. Die so weitergeleiteten Zugspannungen führen dazu, dass sich die Schuppen 120 aufrichten.

Der adaptive Sonnenschutz wird gemäß Ausführungsbeispielen dadurch erreicht, dass die Schuppen 120 in dem Textilmaterial 110 sich bei Ausübung der Zugspannung Z einseitig aufrichten (zum Beispiel aus der Zeichenebene heraus). Dadurch entstehen Öffnungen innerhalb des Textilmaterials 110, deren Größe (und somit der Transmissionsgrad) durch die Stärke der Zugspannung Z regelbar ist. Außerdem ist es möglich, dass in Abhängigkeit der Einfallsrichtung eines beispielhaften Sonnenlichts eine solche Zugspannung Z ausgeübt wird, dass eine effektive Ablenkung des einfallenden Sonnenlichts möglich wird.

Da der genutzte Mechanismus rein über Formeigenschaften und Materialeigenschaften erzeugt wird, werden keine zusätzlichen Scharniere o. ä. Elemente benötigt, wodurch eine aufwändige und verschleißanfällige Konstruktion umgangen werden kann.

Um die gewünschten Eigenschaften des adaptiven Textils nutzen zu können, wird eine Nachbehandlung (oder Vorverformungen) der Schuppen 120 durchgeführt. Auf diese Weise wird erreicht, dass sich die Schuppen 120 einseitig aufrichten und nicht chaotisch mal in die eine Richtung, mal in die andere Richtung zeigen. Das Resultat wären nicht nur ungewollte und unkontrollierbare Lichtbrechungseffekte, sondern Spannungsspitzen in den entsprechenden Stegen 130, die die Lebensdauer des Textils negativ beeinflussen bzw. zu einem Einreißen der Stege 130 führen können. Um dies zu vermeiden, wird eine Nachbehandlung des geschnittenen Textils 110 vor der Erstverformung durchgeführt.

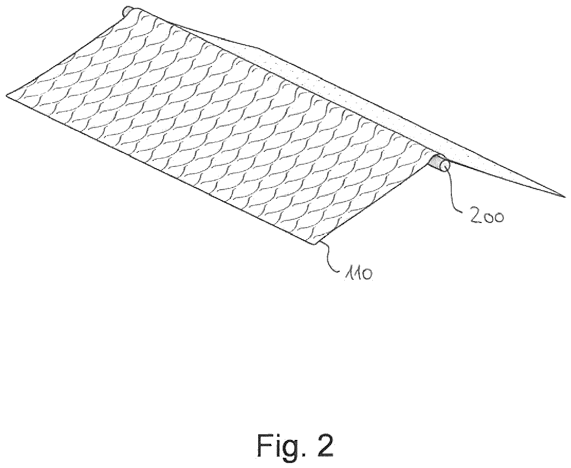

**Fig. 2** zeigt eine mögliche Nachbehandlung, die dem Zweck dient, dass sich alle Schuppen 120 beim Ausüben der Zugspannung Z in eine Richtung aufrichten.

Das Herausbilden der Schnittlinien mittels Lasercutting führt zu einem Verschmelzen der betroffenen Fasern, die beim anschließenden Erhärten verspröden. Durch ein "Knicken" (oder Überdehnen) jeder einzelnen Schuppe 120 in die gewünschte Richtung werden diese spröden Randbereiche gebrochen und zwingen die Verformung in die vorgegebene Richtung. Bei dem gezeigten Ausführungsbeispiel der Fig. 2 wird dieses Überdehnen des Textilmaterials 110 mittels einer Rolle 200 durchgeführt, über die das Textilmaterial unter Ausübung einer Spannung hinweggerollt wird. Dies führt dazu, dass auf der Oberseite des Textilmaterials 110 eine Dehnungsspannung ausgeübt wird und sich dadurch der Randbereich der Laserschnitte mikroskopisch ändert. Als Resultat können sich die Schuppen 120 einseitig leichter aufrichten, wenn eine Zugspannung Z auf das Textilmaterials 110 ausgeübt wird.

Diese Nachbehandlung kann auch dadurch ausgeführt werden, dass das Textilmaterial 110 orthogonal zu den Schuppen 120 eingerollt wird. Auch hierbei brechen die spröden Schnittlinien und geben die Verformung der Schuppen 120 zielgerichtet vor.

Durch Änderungen der Form und Anordnung der Schuppen 120, sowie der Optimierung des Fertigungsverfahrens kann diese Nachbehandlung auch eingeschränkt werden.

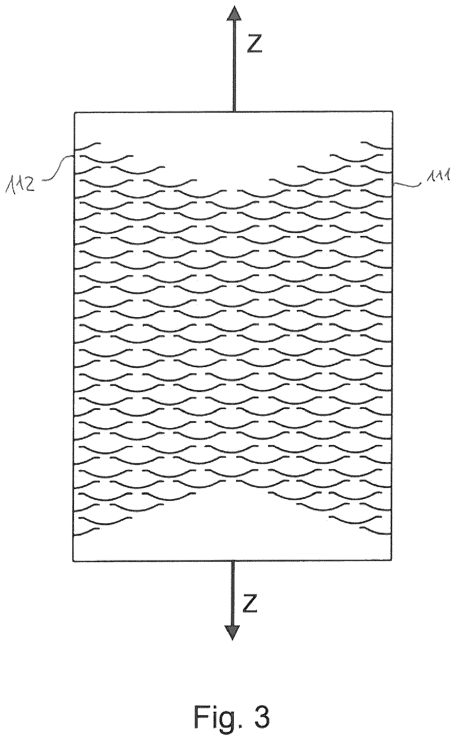

**Fig. 3** zeigt ein Ausführungsbeispiel, bei welchen die Anzahl der Schuppen 120 zu den Rändern 111, 112 des Textilmaterials 110 zunehmen. Dieses Ausführungsbeispiel bietet den Vorteil, dass damit ein verbessertes Aufrichten der Schuppen 120 über das gesamte Textilmaterial 110 erreicht wird. Beispielsweise können sich so alle Schuppen 120 gleichmäßig aus der Zeichenebene bei Ausübung einer Zugspannung Z anheben.

Dieser Effekt wird durch eine Homogenisierung des Spannungsverlaufes erreicht, der die chaotische Verformungen hemmt und wie folgt beschrieben werden kann. Aufgrund der Spannungsdifferenzen benachbarter Stege 130 - besonders in der Nähe der Ränder 111, 112 - sowie den sich diagonal kreuzenden Kraftverläufen, erfahren die dazwischenliegenden Schuppen 120 einen einseitig dominierten Spannungsverlauf. Hier entstehen bevorzugt Richtungsänderungen der Verformung, was zu einem chaotischen Öffnen der Schuppen 120 (in verschiedene Richtungen) infolge geometrischer und mechanischer Eigenschaften führen kann. Diese Effekte konnten durch die in der Fig. 3 gezeigten Schuppenanordnung verringert werden. Gleichzeitig konnten durch Änderung der Schuppenform sowie deren Abstände gerichtete Öffnungen erzielt werden.

Für das Aufrichten sind die Randbereiche kritisch, da dort die Spannungen der Stegenden einen hohen Gradienten aufweisen. Eine weitere Möglichkeit chaotische Verformungen zu verringern, besteht daher in einer Änderung der Endpunkte der Schnittlinien 140 (Beginn und Ende der Schnittlinien 140).

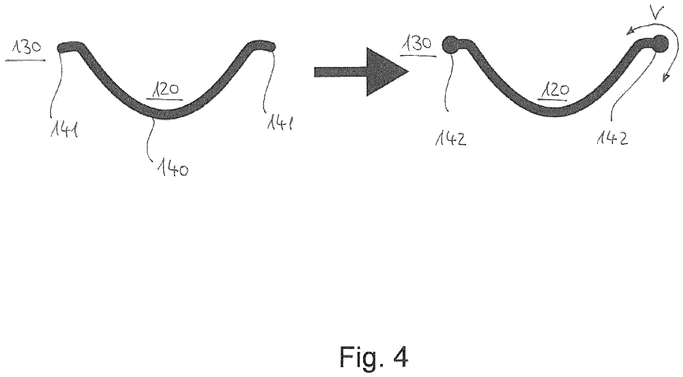

**Fig. 4** zeigt ein Ausführungsbeispiel zur Ausgestaltung der Endpunkte 141 der Laserschnitte 140. Auf der linken Seite ist ein möglicher Laserschnitt 140 gezeigt, bei dem die Endpunkte 141 nicht nachbehandelt wurden, während auf der rechten Seite eine kreisförmige Verbreiterung 142 der Endpunkte der Laserschnitte 140 durchgeführt wurde. Die kreisförmige Verbreiterung 142 auf der rechten Seite hat den Effekt, dass damit Spannungen besser von der Unterseite der gezeigten Schuppen 120 hin zu einer Oberseite geleitet werden (siehe Pfeilrichtung V), was wiederum zu einem leichteren Aufrichten der Schuppe 120 bei Ausübung der Zugspannung Z führt.

Beim Verformen der Schuppen 120 werden nämlich die äußeren Bereiche der Stege 130 besonders stark gedehnt, was im Extremfall zu einem Bauteilversagen (durch Einreißen) führen kann. Gleichzeitig führt es zu einer Weiterleitung inhomogener Spannungsverläufe, anstatt diese im Steg 130 gleichmäßig aufzuteilen. Dadurch können kleine Fehlstellungen verstärkt und chaotische Öffnungen vermeintlich begünstigt werden. Eine Lösung dieses Problems wird durch die gezeigte Ausrundung der Anfangs- und Endbereiche 142 der Schnittlinien 140 erreicht. Die ankommenden Kräfte bündeln sich daher nicht mehr an einer Schnittkante, sondern werden an der Rundung 142 entlang geführt. Auch dieses Merkmal führt zu einer gewünschten Homogenisierung der Spannung innerhalb der Stege 130, sowie zur Verlängerung der Lebensdauer des Textilmaterials 110.

Eine weitere Möglichkeit chaotische Verformungen zu verringern, besteht in einer Änderung der Fertigungstechnik. So können während des Herstellens der Schnittlinien mittels Lasercutting beispielsweise die betroffenen Fasern gezielt verschmolzen werden, sodass der zuvor erwähnte spröde Randbereich entsteht. Da der Laserstrahl hierbei jedoch einseitig wirkt, variiert die Breite der Schnittlinie entlang des Querschnitts.

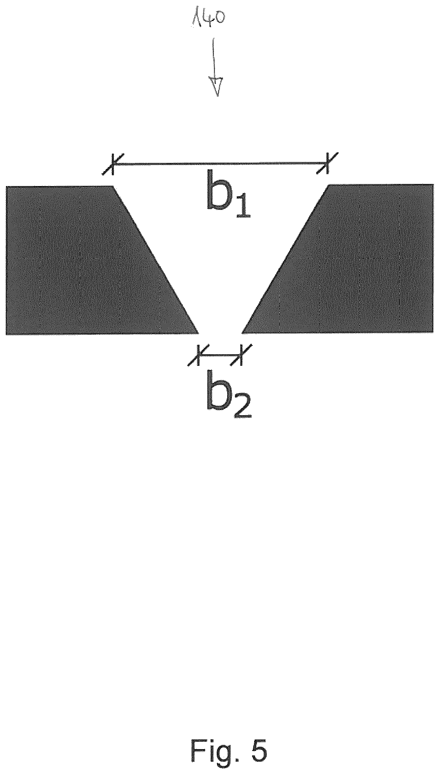

**Fig. 5** zeigt beispielhaft eine Querschnittsansicht durch einen Laserschnitt 140 hindurch, und zwar senkrecht zu der Schnittrichtung beim Herstellen der Laserschnitte 140. Gemäß dem gezeigten Ausführungsbeispiel werden die einzelnen Schnitte 140 derart ausgebildet, dass die Schnittbreite b nicht konstant ist, sondern z. B. von einer Seite des Textilmaterials 110 zur gegenüberliegenden Seite abnimmt. So ist es beispielsweise möglich, dass auf der Seite, von wo der Laser auf das Textilmaterials 110 einwirkt, der Laserschnitt 140 eine Breite von b1 aufweist, während er auf der gegenüberliegenden Seite eine Breite von b2 aufweist und b1 > b2 ist.

Diese Ausgestaltung der Laserschnitte 140 bietet den Vorteil, dass bei Ausübung der Zugspannung Z die ausgeübte Spannung auf beiden Seiten des Textilmaterials 110 unterschiedlich ist, was wiederum dazu führt, dass sich die Schuppen 120 bei dem Ausüben der Zugspannung Z zusammen in eine Richtung derart verbiegen, dass sich der Sonnenschutz ergibt.

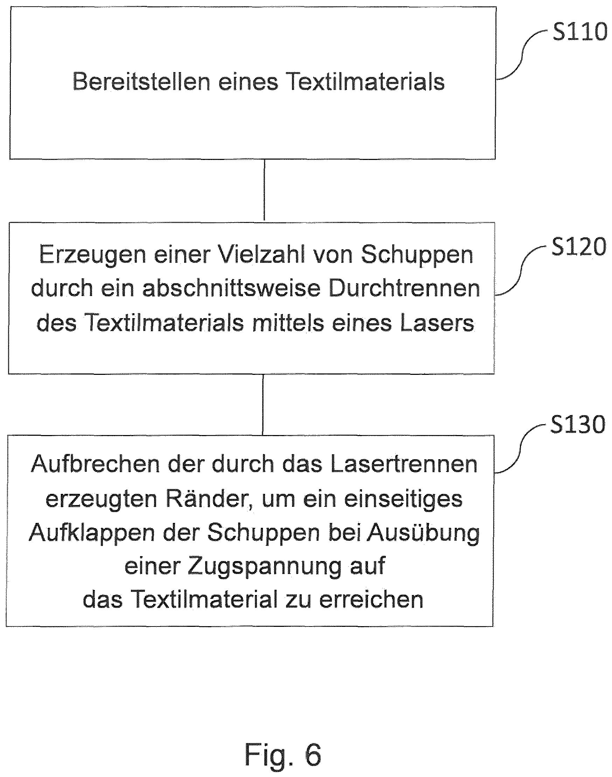

**Fig. 6** zeigt ein Flussdiagramm für ein Verfahren zur Herstellung eines adaptiven Sonnenschutzes. Das Verfahren umfasst die Schritte:
- Bereitstellen S110 eines Textilmaterials 110;
- Erzeugen S120 einer Vielzahl von Schuppen 120 durch ein abschnittsweise Durchtrennen des Textilmaterials 110 mittels eines Lasers; und
- Aufbrechen S130 der durch das Lasertrennen erzeugten Ränder, um ein einseitiges Aufklappen der Schuppen 120 bei Ausübung einer Zugspannung Z auf das Textilmaterial 110 zu erreichen.

Die beschriebenen Ausführungsbeispiele ermöglichen insbesondere einen sommerlichen Wärmeschutz und eine Licht-Lenkungsfunktion und bieten darüber hinaus die folgenden Vorteile:
- es ermöglicht eine stufenlose, flächenintegrale Steuerung,
- die direkte Sonneneinstrahlung kann verringert werden,
- es ergibt sich ein neuartiges Erscheinungsbild,
- eine Lenkungsfunktion des natürlichen Außenlichtes in das Innere von Aufenthaltsräumen wird möglich,
- es bietet eine individuelle Anpassung des Lichteinfalls durch eine einfache Technologie.

Diese Vorteile des adaptiven Sonnenschutzes werden mittels gezielter, parametrischer Schneidmuster auf textilen Oberflächen erreicht. Es entsteht ein Effekt, gezielt Gewölbe und einem damit einhergehenden, unterschiedlichen Lichtdurchlass zu erreichen.

Ausführungsbeispiele des adaptiven Sonnenschutzes umfassen daher insbesondere Rollos und Markisen oder sind dafür nutzbar.

Damit sich das gewünschte Resultat einstellt, sind die Materialeigenschaften des gewählten Stoffes von großer Bedeutung. Außerdem sind die Schnitte möglichst exakt auszuführen, was mittels Laserschneiden erreicht wird. Diese Methode bietet weiterhin den Vorteil, dass Textilien an der Schnittkante weder Ausfransen noch Fäden ziehen können, da die Fasern während des Schneidens verschmelzen. Ein mögliches Material ist beispielsweise ein Polyesterstoff, obwohl die Erfindung darauf nicht eingeschränkt sein soll. Auch nichthomogene Materialien können genutzt werden. Versuche haben ergeben, je dichter das Gewebe, desto mehr nähert sich der Stoff einem homogenen Materialverhalten an. Die erzeugte Schnittkante wird durch das Verschmelzen jedoch sehr brüchig und kann nur noch sehr geringe Zugkräfte aufnehmen. Dies führt dazu, dass die dadurch verminderten Stege mitunter nicht mehr in der Lage sind, die erforderliche Zugkraft, die notwendig ist, dass die Verwölbungen auftreten, aufzunehmen. Dieser Zustand wird dadurch verstärkt, dass der Querschnitt des Steges nicht nur durch die verschmolzenen Schnittkanten verringert wird, sondern nur noch über die intakten vertikalen Fasern Kräfte übertragen kann. Aus diesen Gründen ist es vorteilhaft, die Stege etwas breiter auszubilden. Dies kann je nach Laserschneider und Einstellung variieren und an das jeweilige Material angepasst werden.

### Bezugszeichenliste

- 110: Textilmaterials
- 111,112: Randbereiche
- 120: Schuppen
- 130: Stege
- 140: Laserschnitte
- 141: glatte Endabschnitte
- 142: abgerundete Endabschnitte
- 200: Rolle
- Z: Zugspannung
- α: Maximalwinkel der Seitenflanken

## Patentansprüche

1. Verfahren zur Herstellung eines adaptiven Sonnenschutzes, mit folgenden Schritten:
Bereitstellen (S110) eines Textilmaterials (110);
Erzeugen (S120) einer Vielzahl von Schuppen (120) durch ein abschnittsweise Durchtrennen des Textilmaterials (110) mittels eines Lasers,
**gekennzeichnet durch**:
Aufbrechen (S130) der durch das Lasertrennen erzeugten Ränder, um ein einseitiges Aufklappen der Schuppen (120) bei Ausübung einer Zugspannung (Z) auf das Textilmaterial (110) zu erreichen, wobei das Aufbrechen (S130) der Ränder derart ausgeführt wird, dass Oberflächenbereiche der Ränder auf jener Seite, wohin die Schuppen (120) bei Ausübung einer Zugspannung (Z) aufklappen, überdehnt werden.

2. Verfahren nach Anspruch 1, wobei das Überdehnen durch zumindest eine Rolle (200) ausgeführt wird, über welche das abschnittsweise durchtrennte Textilmaterial (110) unter Ausübung einer Zugspannung gerollt wird.

3. Verfahren nach einem der vorhergehenden Ansprüche,
wobei die Vielzahl von Schuppen (120) mehrere horizontal angeordnete Reihen bilden, die abwechselnd versetzt zueinander ausgebildet sind, und zwischen zwei benachbarten Schuppen (120) in einer Reihe Stege (130) aus Textilmaterial (110) vorhanden sind, und
wobei das Textilmaterial (110) eine Vielzahl von Fasern aufweist und die Stege (130) in Abhängigkeit der Fasern derart ausgebildet werden, dass sich mehrere Fasern durch jeden Steg (130) hindurch erstrecken.

4. Verfahren nach einem der vorhergehenden Ansprüche, wobei die Schuppen (120) in einer Horizontalen nebeneinander angeordnet sind und das Durchtrennen des Textilmaterials (110) zum Ausbilden der Schuppen (120) derart ausgeführt wird, dass die Schuppen (120) entlang ihrer Seitenflanken keinen Winkel (α) von mehr als 45° zur Horizontalen aufweisen.

5. Verfahren nach einem der vorhergehenden Ansprüche, wobei Endabschnitte (142) der durch das Durchtrennen erzeugten Laserschnitte (140) kreisförmige Verbreiterungen aufweisen, um auftretende Spannungen beim Ausüben der Zugspannung um die Endabschnitte (142) herum zu leiten.

6. Verfahren nach einem der vorhergehenden Ansprüche, wobei die Laserschnitte (140) senkrecht zur Schnittrichtung einen Querschnitt aufweisen, der sich in eine Richtung verjüngt.

7. Verfahren nach einem der vorhergehenden Ansprüche, wobei die Anzahl der übereinander angeordneten Schuppen (120) zu einem Randbereich (111, 112) des Textilmaterials (110) zunimmt.

8. Adaptiver Sonnenschutz mit:
einem Textilmaterial (110); und
einer Vielzahl von Schuppen (120), die durch ein abschnittsweises Durchtrennen des Textilmaterials (110) mittels eines Lasers gebildet sind,
**dadurch gekennzeichnet, dass** die durch das Lasertrennen erzeugten Ränder auf einer Seite des Textilmaterials (110) stärker aufgebrochen sind als auf einer gegenüberliegenden Seite, um auf diese Weise ein einseitiges Aufklappen der Schuppen (120) bei Ausübung einer Zugspannung (Z) auf das Textilmaterial (110) zu erreichen, wobei Oberflächenbereiche der Ränder auf jener Seite, wohin die Schuppen (120) bei Ausübung einer Zugspannung (Z) aufklappen, überdehnt sind.

## Claims

1. A method for producing an adaptive sunshade, comprising the following steps:
providing (S110) a textile material (110);
creating (S120) a plurality of scales (120) by cutting through the textile material (110) in portions by means of a laser, **characterized by**:
breaking (S130) the edges created by the laser cutting in order for the scales (120) to open up at one side when tensile stress (Z) is exerted on the textile material (110), the edges being broken (S130) such that surface regions of the edges on the side where the scales (120) open up when tensile stress (Z) is exerted are overstretched.

2. The method according to claim 1, wherein the overstretching is achieved by at least one roll (200), over which the textile material (110) that has been cut through in portions is rolled when tensile stress is exerted.

3. The method according to either of the preceding claims, wherein the plurality of scales (120) form a plurality of horizontal rows which are alternately offset from one another, and connecting portions (130) consisting of textile material (110) are present between two adjacent scales (120) in a row, and wherein the textile material (110) comprises a plurality of fibers and the connecting portions (130) are formed, depending on the fibers, such that a plurality of fibers extend through each connecting portion (130).

4. The method according to any of the preceding claims, wherein the scales (120) are arranged one next to the other in a horizontal line and the textile material (110) is cut through so as to form the scales (120) in such a way that the scales (120) are at an angle (α) of no more than 45° from the horizontal line along the lateral sides thereof.

5. The method according to any of the preceding claims, wherein end portions (142) of the laser cuts (140) created by the cutting comprise circular widenings, in order to guide stresses that occur when the tensile stress is being exerted around the end portions (142).

6. The method according to any of the preceding claims, wherein, perpendicularly to the cutting direction, the laser cuts (140) have a cross section that tapers in one direction.

7. The method according to any of the preceding claims, wherein the number of scales (120) arranged one above the other increases towards an edge region (111, 112) of the textile material (110).

8. An adaptive sunshade comprising:
a textile material (110); and
a plurality of scales (120) which are formed by cutting through the textile material (110) in portions by means of a laser, **characterized in that** the edges created by the laser cutting are broken to a greater extent on one side of the textile material (110) than on an opposite side, in order for the scales (120) to thereby open up at one side when tensile stress (Z) is exerted on the textile material (110), surface regions of the edges on the side where the scales (120) open up when tensile stress (Z) is exerted being overstretched.

## Revendications

1. Procédé de fabrication d'une protection solaire adaptative, comportant les étapes suivantes :
la mise à disposition (S110) d'un matériau textile (110) ;
la génération (S120) d'une pluralité d'écailles (120) en découpant le matériau textile (110) sur certaines parties au moyen d'un laser,
**caractérisé par** :
la rupture (S130) des bords produits par la découpe au laser afin de réaliser une ouverture unilatérale des écailles (120) lors de l'application d'une contrainte de traction (Z) sur le matériau textile (110), la rupture (S130) des bords étant effectuée de manière à ce que les zones de surface des bords du côté sur lequel les écailles (120) s'ouvrent lors de l'application d'une contrainte de traction (Z) soient surétirées.

2. Procédé selon la revendication 1, dans lequel le surétirement est effectué par au moins un rouleau (200) sur lequel le matériau textile (110) découpé sur certaines parties est roulé lors de l'application d'une contrainte de traction.

3. Procédé selon l'une des revendications précédentes,
dans lequel la pluralité d'écailles (120) forment plusieurs rangées disposées horizontalement, lesquelles sont alternativement décalées les unes par rapport aux autres, et des éléments jointifs (130) en matériau textile (110) sont présents en une rangée entre deux écailles adjacentes (120), et
dans lequel le matériau textile (110) présente une pluralité de fibres, et les éléments jointifs (130) sont formés en fonction des fibres de sorte que plusieurs fibres s'étendent à travers chaque élément jointif (130).

4. Procédé selon l'une des revendications précédentes, dans lequel les écailles (120) sont disposées côte à côte dans une horizontale, et la découpe du matériau textile (110) destinée à former les écailles (120) est effectuée de sorte que les écailles (120) ne présentent, le long de leurs flancs latéraux, aucun angle (α) supérieur à 45° par rapport à l'horizontale.

5. Procédé selon l'une des revendications précédentes, dans lequel des parties d'extrémité (142) des découpes laser (140) produites par la découpe présentent des élargissements circulaires afin de guider des contraintes se produisant lors de l'application de la contrainte de traction autour des parties d'extrémité (142).

6. Procédé selon l'une des revendications précédentes, dans lequel les découpes laser (140) présentent, perpendiculairement à la direction de coupe, une section transversale qui s'effile dans une direction.

7. Procédé selon l'une des revendications précédentes, dans lequel le nombre d'écailles (120) disposées les unes au-dessus des autres augmente jusqu'à une zone de bord (111, 112) du matériau textile (110).

8. Protection solaire adaptative comportant :
un matériau textile (110) ; et
une pluralité d'écailles (120) qui sont formées en découpant le matériau textile (110) sur certaines parties au moyen d'un laser,
**caractérisée en ce que**
les bords produits par la découpe au laser sont davantage ouverts sur un côté du matériau textile (110) que sur un côté opposé, afin de réaliser ainsi une ouverture unilatérale des écailles (120) lors de l'application d'une contrainte de traction (Z) sur le matériau textile (110), des zones de surface des bords du côté sur lequel les écailles (120) s'ouvrent lors de l'application d'une contrainte de traction (Z) étant surétirés.
